# EUROPÄISCHE PATENTANMELDUNG

(11) **EP 3 705 166 A1**
(43) Veröffentlichungstag der Anmeldung: **09.09.2020**
(21) Anmeldenummer: 19161538.4
(22) Anmeldetag: 08.03.2019
(51) Int. Cl.: B01D 46/02, B01D 46/06

(54) **FILTERSCHLAUCH IN TORUSAUSFÜHRUNG**

(71) Anmelder: Carl Freudenberg KG, 69469 Weinheim (DE)
(72) Erfinder: SCHULZ, Karsten, 74924 Neckarbischofsheim (DE)

(57) **Zusammenfassung**

Die Erfindung betrifft einen Filterschlauch (1) für Schlauchfilteranlagen (10), umfassend einen schlauchförmigen Filterkörper (2), der an einer Stirnseite (3) verschlossen ist und an der anderen Stirnseite eine Aufnahme (4) zur Befestigung in der Schlauchfilteranlage (10) aufweist. Erfindungsgemäß besitzt der Filterkörper (2) eine Mehrzahl von Toruskörpern (5).

Durch die erfindungsgemäße Struktur des Filterkörpers (2) erhöht sich in vorteilhafter Weise die Filterfläche, die Abreinigbarkeit und die Flexibilität des Filterkörpers (2).

## Beschreibung

Die Erfindung betrifft einen Filterschlauch gemäß dem Oberbegriff von Anspruch 1.

### Stand der Technik

Filterschläuche und Schlauchfilteranlagen sind allgemein bekannt. Schlauchfilteranlagen werden häufig zur Reinigung von staubhaltigen Gasen in Kraftwerken eingesetzt. In einer Schlauchfilteranlage sind mehrere Filterschläuche zusammengefasst. Dazu sind die Filterschläuche auf einen Stützkörper aufgespannt, der sich auf der Reingasseite befindet. Beim Durchströmen der Filterschläuche von außen nach innen wird der Staub auf der Außenseite des Schlauches zurückgehalten und das gereinigte Gas gelangt aus dem Inneren des Filterschlauches zur Reingasseite. Filterschläuche können durch Aufbringen von Druckstößen von der Reingasseite abgereinigt werden. Durch den Druckstoß löst sich der an dem Filterschlauch haftende Filterkuchen und fällt in einen Staubsammelbehälter auf der Rohgasseite, unterhalb der Filterschläuche.

Ein Filterschlauch ist beispielsweise in der DE 10 2005 026 156 A1 beschrieben. Der Filterschlauch für Schlauchfilteranlagen, umfasst einen schlauchförmigen Filterkörper, der an einer Stirnseite verschlossen ist und an der anderen Stirnseite eine Aufnahme zur Befestigung in der Schlauchfilteranlage aufweist, wobei der Filterkörper aus einem thermisch verfestigten Vliesstoff gebildet ist.

Aus der DE 1 254 597 B1 ist es bekannt für einen Filterschlauch einen korbförmigen Stützkörper vorzusehen.

Sollen bei Filterschläuchen größere Filterflächen bereitgestellt werden, so ist es bekannt, das Filtermaterial zu plissieren. Nachteilig bei plissierten Faltenpaketen ist jedoch, dass die Oberfläche des Filtermaterials sehr verwinkelt ist und keine glatte Oberfläche vorliegt. Sich am Filter festsetzende Partikel, der sogenannte Filterkuchen, lassen sich daher nur mit großem Aufwand abreinigen.

### Aufgabenstellung

Aufgabe der vorliegenden Erfindung ist es einen Filterschlauch mit größerer und flacherer Filterfläche zu schaffen der eine gute Filtration mit einer verbesserten Abreinigbarkeit verbindet.

### Technische Lösung

Gelöst wird diese Aufgabe durch einen Filterschlauch mit den Merkmalen von Anspruch 1.

Erfindungsgemäß wurde als vorteilhaft erkannt einen Filterschlauch in Torusausführung zu gestalten.

Der erfindungsgemäße Filterschlauch dient dem Einsatz in Schlauchfilteranlagen und umfasst einen schlauchförmigen Filterkörper, welcher aus einem flächigen Filtermaterial gebildet ist, und der an einer Stirnseite verschlossen ist und an der anderen Stirnseite eine Aufnahme zur Befestigung in der Schlauchfilteranlage aufweist.
In vorteilhafter Ausgestaltung besitzt der Filterkörper eine Mehrzahl von wulstförmigenToruskörpern. Die Toruskörper sind dabei konvex, von einer Mittelachse des Filterkörpers weg nach außen gewölbt.
Ein jeweiliger Toruskörper kann beschrieben werden durch einen senkrecht stehenden Halbkreis, welcher zu einer Mittelachse des Filterkörpers hin geöffnet ist und um diese Mittelachse rotiert wird, sodass eine wulstförmige Teilringfläche gebildet wird.

In vorteilhafter Weise wird so die Filterfläche des Filterschlauches im Vergleich zu einem rein zylindrischen Filterschlauch erhöht und damit die Filtrationsleistung verbessert.

Ein solcher Filterschlauch hat den weiteren Vorteil, dass dank einer nicht mit Faltkanten versehenen und weniger verwinkelten Oberfläche zu filternde Partikel an der Oberfläche haften bleiben ohne sich in Ecken oder Ritzen festzusetzen und daher leichter abgereinigt werden können. Das Abreinigen kann durch eine glatte Oberfläche des Filtermaterials weiter verbessert werden.

Durch die erfindungsgemäße Struktur des Filterkörpers erhöht sich also die Filterfläche, die Abreinigbarkeit und auch die Flexibilität des Filterkörpers.

Ein weiterer Vorteil besteht in der Austauschbarkeit in bestehenden Schlauchfilteranlagen. Bei gleichem Außendurchmesser könnten zylindrische Filterschläuche in bestehenden Anlagen durch erfindungsgemäße Filterschläuche mit Toruskörpern ersetzt werden und dabei Druckverluste reduziert und Lebensdauern erhöht werden, auch bei kritischen Stäuben (z.B. klebrigen und/oder faserhaltigen), bei denen gefaltete, patronenähnliche Filterschläuche mit Faltenpaketen infolge der engen Faltenwinkel ungeeignet wären.

In einer ersten besonders vorteilhaften Ausführungsvariante sind
die Toruskörper axial aneinandergereiht, sodass sich ein Toruskörper an einen nächsten Toruskörper anschließt. Ein solcher Filterschlauch ist durch eine besonders große Filterfläche gekennzeichnet.

In einer zweiten vorteilhaften Ausführungsvariante des erfindungsgemäßen Filterschlauchs ist zwischen einem Toruskörper und einem axial benachbarten nächsten Toruskörper ein zylindrisches Zwischenstück angeordnet. Ein solcher Filterschlauch ist durch eine besonders gute Abreinigbarkeit gekennzeichnet. Insbesondere können die zylindrischen Zwischenstücke eine Höhe von 20 - 50 mm aufweisen.

In einer besonders vorteilhaften Weiterbildung des erfindungsgemäßen Filterschlauchs liegt der Torusradius der Toruskörper im Bereich von 10 - 40 mm, insbesondere im Bereich von 20 - 30 mm. Der Torusradius beschreibt die Wölbung bzw. Krümmung der wulstförmigen Toruskörper.

Geometrische Berechnungen der konvexen Torusform haben ergeben, dass, bei gleichem Außendurchmesser eines Filterschlauchs bei der konvexen Torusform, bei der ein konvexer Torus auf den anderen folgt (d.h. ohne zylindrische Zwischenstücke) die Filterfläche im Vergleich zum zylindrischen Schlauch deutlich um erhöht ist (hier um 39 %).
Grundlage ist, dass der Torusradius einer sinnvollen, vergleichbaren Filterpatronenfaltentiefe entspricht (hier 25 mm).

Selbst bei Schlauchfilterformen, bei denen sich Torus- und Zylinderstücke abwechseln, ist die Filterfläche im Vergleich zum zylindrischen Schlauch noch wesentlich erhöht (hier um 26 %), wenn die Zylinderhöhe einer sinnvollen, vergleichbaren Filterpatronenfaltentiefe entspricht (hier 25 mm).
Die Filterfläche ist im Vergleich zum zylindrischen Schlauch immer noch merklich erhöht (hier um 20 %), wenn die Zylinderlänge doppelt so lang ist wie die sinnvolle, vergleichbare Filterpatronenfaltentiefe (hier also 50 mm).

In einer besonders vorteilhaften und daher bevorzugten Weiterbildung des erfindungsgemäßen Filterschlauchs wird das Filtermaterial des Filterkörpers aus einem Vliesstoff gebildet.

Der Vliesstoff kann eine Beschichtung aufweisen. Die Beschichtung kann durch Nanofasern oder durch eine PTFE-Beschichtung gebildet sein. Durch diese Beschichtung erhöht sich nochmals die Abscheideleistung des Filters. Andere mögliche Beschichtungen können durch Plasmabehandlungen oder Tauchbeschichtungen auf den Filterkörper aufgebracht werden. Je nach Ausführung kann der Filterkörper dabei hydrophil/hydrophob und/oder oleophil/oleophob ausgerüstet sein. Durch eine Beschichtung mit Salzen, beispielsweise Borsalzen, kann der Filterkörper zusätzlich schwerentflammbar ausgerüstet sein.

In einer vorteilhaften Weiterbildung des erfindungsgemäßen Filterschlauchs ist das Filtermaterial des Filterkörpers thermisch, mechanisch oder chemisch verfestigt.

Der Filterkörper kann z.B. aus einem thermisch verfestigten Vliesstoff gebildet sein. Thermisch verfestigte Vliesstoffe weisen durch stoffschlüssig miteinander verbundene, teilweise aufgeschmolzene Fasern eine geringe Porengröße auf. Dadurch wird eine hohe Abscheideleistung auch für kleine Partikel erreicht. Der Vliesstoff weist eine geringe Dicke auf und die Filtration erfolgt aufgrund der kleinen Poren an der Oberfläche des Filterkörpers.

In einer möglichen Ausgestaltung des erfindungsgemäßen Filterschlauchs ist im Inneren des Filterkörpers ein Stützelement, insbesondere ein Stützkorb, angeordnet, um das Filtermaterial des Filterkörpers zu stützen und eine ausreichende Stabilität des Filterkörpers zu gewährleisten. Das Stützelement kann z.B. als korbähnliches Geflecht aus dünnen Strängen, z.B. Metalldraht oder Kunststoffband ausgebildet sein.

Die torusförmigen Strukturen des erfindungsgemäßen Filterkörpers des Filterschlauchs können mittels Tiefziehen dauerhaft in den Filterkörper eingebracht werden.

Die Erfindung betrifft auch eine Schlauchfilteranlage mit einer Mehrzahl von wie vorstehend beschriebenen Filterschläuchen.

Die Erfindung betrifft auch die Verwendung von obenstehend beschriebenen Filterschläuchen in einer in Schlauchfilteranlage, insbesondere einer Entstaubungsanlage, z.B. der Zementindustrie, Galvanikindustrie oder Lebensmittelindustrie.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1a und b: zwei alternative Ausführungen eines Filterschlauchs gemäß dem Stand der Technik
- Fig. 2a und b: zwei alternative Ausführungen eines erfindungsgemäßen Filterschlauchs
- Fig. 3a und b: Ausschnitte der Filterschläuche aus Fig. 2a und b in einer Detaildarstellung
- Fig. 4: eine Schlauchfilteranlage mit Filterschläuchen

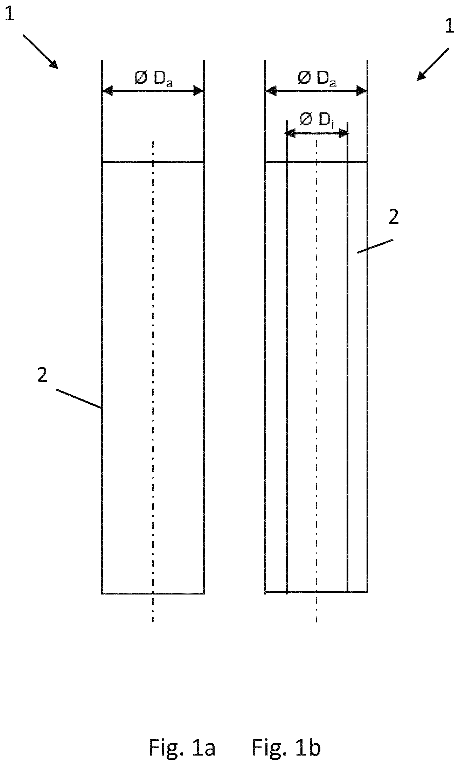

In den Figuren 1a und 1b sind Filterschläuche 1 gemäß dem Stand der Technik dargestellt. Die Filterkörper 2 der Filterschläuche 1 sind zylindrisch ausgeführt. In der Variante gemäß Figur 1a ist der Filterkörper 2 aus einem flächigen Filtermaterial. In der Variante gemäß Figur 1b ist der Filterkörper 2 ebenfalls aus einem flächigen Filtermaterial, welches jedoch durch Falten in eine plissierte Form gebracht wurde.

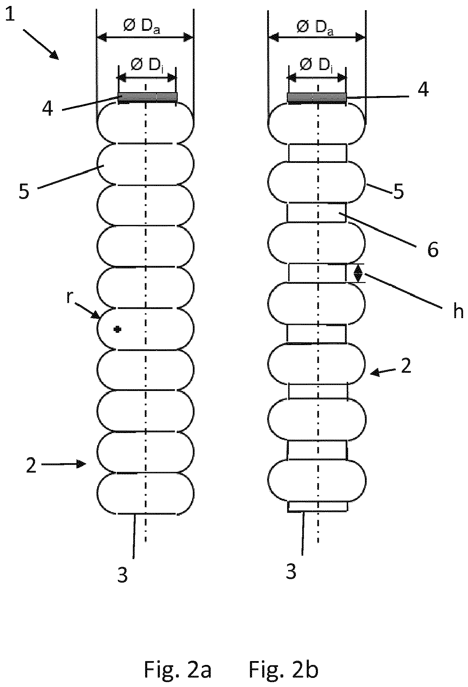

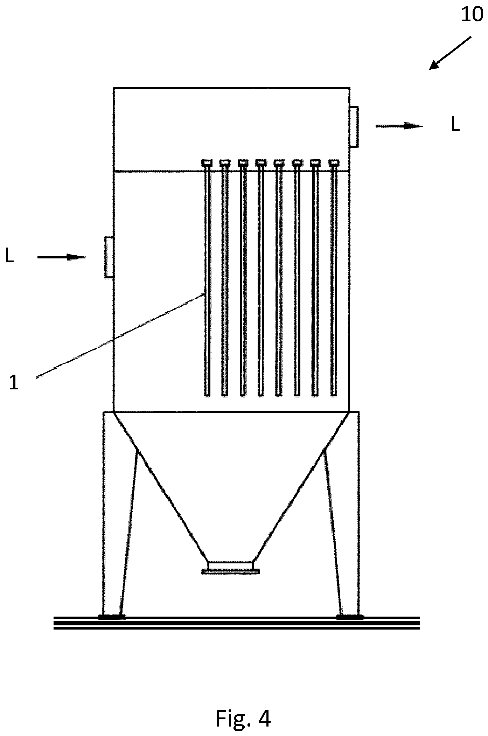

In den Figuren 2a und 2b sind Filterschläuche 1 gemäß der Erfindung dargestellt. Die Filterkörper 2 der Filterschläuche 1 besitzen jeweils eine Mehrzahl von wulstförmigen Toruskörpern 5. An ihrer unteren Stirnseite sind die Filterkörper 2 durch einen Boden 3 verschlossen. An ihrer oberen Stirnseite weisen die Filterkörper 2 jeweils eine Aufnahme 4 auf zur Befestigung in einer Schlauchfilteranlage 10, siehe Figur 4. Die Filterkörper 2 besitzen jeweils einen Innendurchmesser Dᵢ und einen äußeren Außendurchmesser Dₐ.
Die Toruskörper 5 sind konvex nach außen gewölbt, weg von einer strichpunktiert dargestellten Mittelachse des Filterkörpers 2. Die Wölbung der Toruskörper 5 kann durch einen Torusradius r beschrieben werden.
In der Ausführungsvariante gemäß Figur 2a sind die Toruskörper 5 entlang einer strichpunktiert dargestellten Mittelachse des Filterkörpers 2 axial aneinandergereiht, sodass sich ein Toruskörper 5 an einen nächsten Toruskörper 5 anschließt.
In der Ausführungsvariante gemäß Figur 2b ist jeweils zwischen einem Toruskörper 5 und einem axial benachbarten nächsten Toruskörper 5 ein zylindrisches Zwischenstück 6 angeordnet. Die zylindrischen Zwischenstücke 6 besitzen jeweils eine Höhe h.

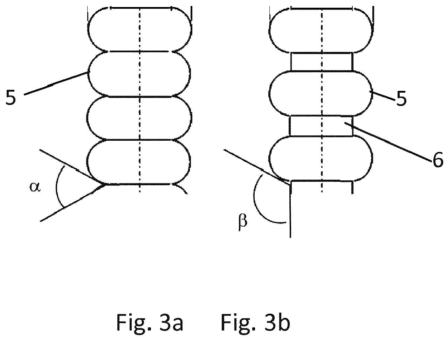

In den Figuren 3a und 3b sind die Filterkörper 2 aus den Figuren 2a und 2b noch etwas detaillierter dargestellt. Der Übergang zwischen zwei benachbarten, aneinandergereihten Toruskörpern 5 ist in Figur 3a mit dem Übergangswinkel α bezeichnet. Der Übergang zwischen einem Toruskörper 5 und einem zylindrischen Zwischenstück 6 ist in Figur 3b mit dem Übergangswinkel β bezeichnet.

Weil diese Winkel α und β viel größer sind als der Winkel zwischen aneinander angrenzenden Faltflächen eines plissierten Filterkörpers und somit keine engen Winkel bzw. Falten vorliegen, ergibt sich eine geringere Reibung und Anhaftung von gefilterten Partikeln an dem Filterkörper 2. Dies resultiert in einem besseren Abreinigungsverhalten, d. h. ein Filterkuchen kann besser abgeworfen werden.

Der Übergangswinkel β ist deutlich größer als der Übergangswinkel a, sodass das Abreinigungsverhalten in der Variante gemäß Figur 3b deutlich besser ist, was allerdings mit einer geringeren Gesamtfilterfläche einhergeht.

Figur 4 zeigt eine Schlauchfilteranlage 10 für stationäre Entstaubungsanlagen in Kraftwerken, in die Filterschläuche 1 gemäß Figur 1 montiert sind. Die Filterschläuche 1 werden von einem Luftstrom L durchströmt, welcher dabei gereinigt wird.

### Bezugszeichenliste

- 1: Filterschlauch
- 2: Filterkörper
- 3: Boden
- 4: Aufnahme
- 5: Toruskörper
- 6: zylindrisches Zwischenstück

- 10: Schlauchfilteranlage

- h: Höhe des zylindrischen Zwischenstücks
- r: Torusradius
- Dᵢ: Innendurchmesser
- Dₐ: Außendurchmesser
- L: Luftstrom

- α: Übergangswinkel
- β: Übergangswinkel

## Patentansprüche

1. Filterschlauch (1) für Schlauchfilteranlagen (10), umfassend einen schlauchförmigen Filterkörper (2), der an einer Stirnseite (3) verschlossen ist und an der anderen Stirnseite eine Aufnahme (4) zur Befestigung in der Schlauchfilteranlage (10) aufweist,
**dadurch gekennzeichnet, dass**
der Filterkörper (2) eine Mehrzahl von Toruskörpern (5) besitzt.

2. Filterschlauch nach Anspruch 1 **dadurch gekennzeichnet, dass** die Toruskörper (5) axial aneinander gereiht sind.

3. Filterschlauch nach Anspruch 1 **dadurch gekennzeichnet, dass** zwischen einem Toruskörper (5) und einem axial benachbarten Toruskörper (5) ein zylindrisches Zwischenstück (6) angeordnet ist.

4. Filterschlauch nach Anspruch 3 **dadurch gekennzeichnet, dass** die zylindrischen Zwischenstücke (6) eine Höhe (h) von 20 - 50 mm aufweisen.

5. Filterschlauch nach einem der vorangehenden Ansprüche **dadurch gekennzeichnet, dass**
der Torusradius (r) der Toruskörper (5) im Bereich von 10 - 40 mm liegt.

6. Filterschlauch nach einem der vorangehenden Ansprüche **dadurch gekennzeichnet, dass**
das Filtermaterial des Filterkörpers (2) aus einem Vliesstoff gebildet wird.

7. Filterschlauch nach einem der vorangehenden Ansprüche **dadurch gekennzeichnet, dass**
das Filtermaterial des Filterkörpers (2) verfestigt ist.

8. Filterschlauch nach einem der vorangehenden Ansprüche **dadurch gekennzeichnet, dass**
im Inneren des Filterkörpers (2) ein Stützelement, insbesondere ein Stützkorb, angeordnet ist.

9. Schlauchfilteranlage (10) mit einer Mehrzahl von Filterschläuchen (1) nach einem der vorangehenden Ansprüche.

10. Verwendung des Filterschlauchs (1) nach einem der Ansprüche 1 - 8 in einer Schlauchfilteranlage (10), insbesondere einer stationären Entstaubungsanlage.
